(19) Europäisches Patentamt
European Patent Office
Office européen des brevets

(11) **EP 1 943 905 B1**

(12) **EUROPEAN PATENT SPECIFICATION**

(45) Date of publication and mention
of the grant of the patent:
**01.04.2015 Bulletin 2015/14**

(51) Int Cl.:
***A23G 9/32*** *(2006.01)*     ***A23G 9/04*** *(2006.01)*
***A23G 9/44*** *(2006.01)*

(21) Application number: **07119966.5**

(22) Date of filing: **05.11.2007**

(54) **Frozen confections with low total solids and methods of producing them**

Gefrorene Süßwaren mit niedriger Trockenmasse und Verfahren zu ihrer Herstellung

Confiseries glacées à contenu matière sèche basse et leurs procédés de fabrication

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **05.12.2006 EP 06125396**

(43) Date of publication of application:
**16.07.2008 Bulletin 2008/29**

(73) Proprietors:
• **Unilever PLC**
**London**
**EC4Y 0DY (GB)**
Designated Contracting States:
**CY GB IE MT**
• **Unilever N.V.**
**3013 AL Rotterdam (NL)**
Designated Contracting States:
**AT BE BG CH CZ DE DK EE ES FI FR GR HU IS IT LI LT LU LV MC NL PL PT RO SE SI SK TR**

(72) Inventors:
• **Burns, Ian, William**
**Bedford, Bedfordshire MK44 1LQ (GB)**

• **Farr, Robert, Stanley**
**3133 AT, Vlaardingen (NL)**
• **Hoddle, Andrew**
**Bedford, Bedfordshire MK44 1LQ (GB)**
• **Mayes, Daniel, Matthew**
**Bedford, Bedfordshire MK44 1LQ (GB)**

(74) Representative: **Keenan, Robert Daniel**
**Unilever PLC**
**Unilever Patent Group**
**Colworth House**
**Sharnbrook**
**Bedford**
**Bedfordshire MK44 1LQ (GB)**

(56) References cited:
WO-A-96/34537     WO-A-97/04663
WO-A-2006/007923     US-A- 4 832 976
US-A- 5 738 889     US-A1- 2002 001 656

• MARSHALL R T ET AL: "Ice Cream" ICE CREAM, 2000, pages 22-23,28, XP002278685

## Description

## Technical Field of the Invention

The present invention relates to frozen confections, in particular to frozen confections having very low solids contents, and methods for producing them.

## Background to the invention

Water ices, fruit ices, milk ices and similar frozen confections are popular products. These types of frozen confections are essentially made from water and sugar, together with other ingredients such as fruit, milk solids, colours, flavours, stabilizers and acidifying agents. The solids (i.e. all the ingredients other than water), the most part of which is sugar, typically constitute 15 to 25% of the frozen confection.

There is now a demand from consumers for frozen confections containing reduced amounts of sugar, for example because of health concerns relating to dental health, obesity, and diseases such as type 2 diabetes. The importance of limiting the content of sugars in a healthy diet has recently been highlighted by a Joint WHO/FAO Expert Committee (see "Diet, nutrition and the prevention of chronic diseases" - Report of a Joint WHO/FAO Expert Consultation, WHO Technical Report Series 916, WHO, Geneva, 2003). Simply lowering the sugar content (and hence the total solids content) of frozen confections results in products that are hard and icy. Such products are generally not appreciated by the consumer. It is also possible to make products softer by incorporating substantial amounts of air, but consumers generally prefer water ices and milk ices that have little or no overrun.

US 5 738 889 discloses a deformable ice confection comprising oblate ellipsoidal ice particles. The ellipsoidal particles are said to allow a high volume of ice while the product retains its deformable properties. However, making such ellipsoidal particles is inconvenient on an industrial scale. US 5 698 247 discloses a frozen, spoonable water ice produced by making ice granules at a temperature of -10°C or below and mixing the ice granules with a flavoured ice slurry. However, making ice granules at -10°C or below is also inconvenient on an industrial scale. Moreover, the frozen water ices exemplified in US 5 738 889 and US 5 698 247 contain approximately 20% sugar, typical of conventional water ice products. Therefore, there remains a need for improved low sugar frozen confections and methods for producing them.

## Tests and Definitions

Unless defined otherwise, all technical and scientific terms used herein have the same meaning as commonly understood by one of ordinary skill in the art (e.g. in frozen confectionery manufacture). Definitions and descriptions of various terms and techniques used in frozen confectionery manufacture are found in "Ice Cream", 6th Edition, Robert T. Marshall, H. Douglas Goff and Richard W. Hartel (2003), Kluwer Academic/Plenum Publishers. All percentages, unless otherwise stated, refer to the percentage by weight, with the exception of percentages cited in relation to the overrun.

Total Solids Content

The total solids content of a frozen confection is the dry weight of the confection, i.e. the sum of the weights of all the ingredients other than water, expressed as a percentage of the total weight. It is measured by the oven drying method as described in "Ice Cream", 6th Edition, Marshall et al. (2003) p296.

Overrun

Overrun is defined by the following equation:

$$\text{overrun \%} = \frac{\text{density of mix - density of frozen confection}}{\text{density of frozen confection}} \times 100$$

It is measured at atmospheric pressure.

Total Ice Content

Total ice content is measured by adiabatic calorimetry as described by de Cindio and Correra in the Journal of Food Engineering (1995) 24 pp.405-415. Calorimetric techniques, particularly adiabatic calorimetry, have proved to be the most suitable, since they can be used on complex food systems, and do not require any other information about the food, such as composition data, unlike some of the other techniques. The large measured sample size (80g) allows measurement of heterogeneous samples such as those claimed.

Frozen Particle Size and Aspect Ratio

Frozen particles are 3-dimensional objects, often of an irregular shape. However, methods for viewing and measuring such particles are often 2-dimensional (see below). Consequently, measurements are often made solely in one or two dimensions and converted to the required measurement. The size of a particle can be calculated from an area size measurement by assuming a regular shape for the particle and calculating the size or volume on that basis. By "area size", we mean the maximum area as seen in the image plane (i.e. when viewed using optical imaging). Typically, the assumed regular shape is a sphere and therefore the size is $2 \times \sqrt{(\text{area size}/\pi)}$. The aspect ratio is defined as the ratio of the maximum and minimum diameters seen in the image plane. The frozen particle size and aspect ratio distributions of a frozen product can be measured as follows.

*Sample Preparation*

All equipment, reagents and products used in sample preparation are equilibrated to the measurement temperature (-10°C) for at least 10 hours prior to use. A 10 g sample of the frozen confection is taken and added to 50 cm$^3$ of a dispersing solution consisting of 20% ethanol in aqueous solution, and gently agitated for 30s or until the sample has completely dispersed into single particles. The aqueous ethanol dispersing solution can be designed to match the measurement conditions of the experimental system: see 'Concentration properties of aqueous solutions: conversion tables' in "Handbook of Chemistry and Physics", CRC Press, Boca Raton, Florida, USA. The whole ice / ethanol / water mix is then gently poured into a 14 cm diameter Petri dish, ensuring complete transfer, and again gently agitated to ensure even dispersal of the ice particles in the dish. After 2 s (to allow for cessation of particle movement) an image is captured of the full dish. Ten replicate samples are taken for each product.

*Imaging*

Images can be acquired using a domestic digital camera (e.g. JVC KY55B) with its macro-lens assembly as supplied. The camera is selected to provide sufficient magnification to reliably image particles with an area size from 0.5 mm$^2$ to greater than 50 mm$^2$. For imaging, the Petri dish containing the sample is placed on a black background and illuminated at low angle (Schott KL2500 LCD) to enable the frozen particles to be easily visualised as bright objects.

*Analysis*

Image analysis is conducted using the Carl Zeiss Vision KS400 Image analysis software (Imaging Associates Ltd, 6 Avonbury Business Park, Howes Lane, Bicester, OX26 2UA) to determine the area size of each particle in the image. User intervention is required to remove from the image: the edge of the Petri dish, air bubbles, coincidentally connected frozen particles and any residual undispersed material. Of these features, only the apparent connection between frozen particles is relatively frequent. The 10 samples taken allow for the sizing of at least 500, and typically several thousand, particles for each product characterised. From this image analysis it is possible to calculate the range and mean of the diameters of the frozen particles, and the aspect ratio.

Measurement of mechanical properties

The standard four point bend test can be used to determine a number of mechanical properties of frozen confections, including the (apparent) Young's modulus and flexure strength. In a bend test, a test piece is deformed whilst measuring the applied force and test piece deflection. The general test applied to all types of solids is described in "Biomechanics Materials. A Practical Approach" Ed. J.F.V. Vincent, Pub. IRL Press, Oxford University Press, Walton Street, Oxford, 1992 and "Handbook of Plastics Test materials" Ed. R.P. Brown, Pub. George Godwin Limited, The Builder Group, 1-3 Pemberton Row, Fleet Street, London, 1981.

The test piece for the 4-point bend test is a parallel sided rectangular bar of frozen confection. This may be obtained by using aluminium moulds producing bars having the dimensions 25 x 25 x 200 mm, as follows. The dispersion of frozen particles and mix is poured into a mould which has been pre-cooled to -25°C. The filled mould is then placed in a blast freezer at-35°C for at least 2 hours. The samples are then de-moulded and stored at-25°C until testing. At least 18 - 24 hours prior to testing the samples are equilibrated by placing them in a freezer at -18°C, the temperature at which the test is performed.

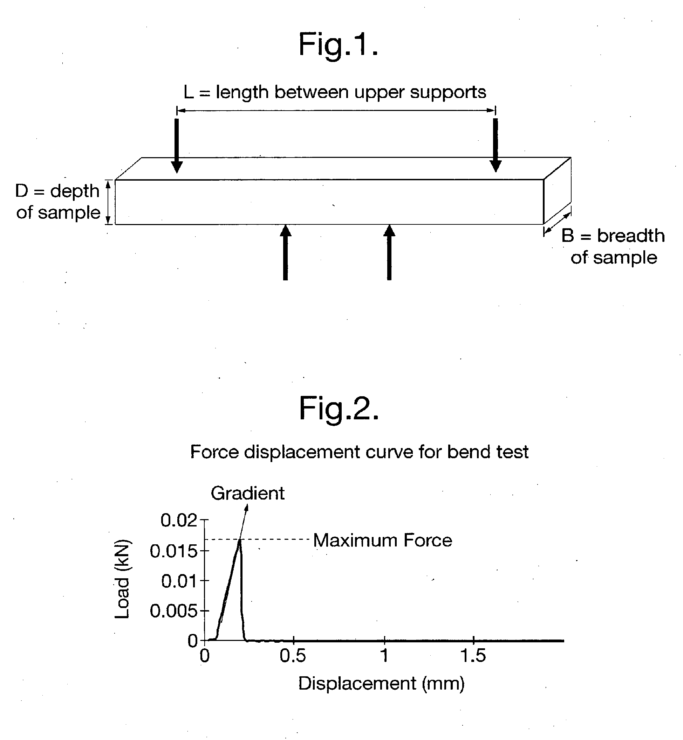

In the test, the bar is placed onto 2 lower supports (separated by 85mm, and positioned symmetrically about the centre of the bar's length). The lower supports are moved upwards so that the top surface of the bar comes into contact with two upper supports (separated by 170 mm, and also positioned symmetrically about the centre of the bar's length) as shown in Figure 1. The bar is bent by continuing to move the lower supports upwards until it fractures. The force applied in bending and the displacement of the moving contact is recorded throughout the test. The upward speed of the moving supports is 50mm per minute.

A schematic data set for a frozen confection is shown in Figure 2. The apparent Young's (elastic) modulus, E, is determined from the gradient of the initial linear part of this curve:

$$E = \frac{gradient \times L^3}{4 \times B \times D^3}$$

where the gradient is that shown in Figure 2, L is the length between the upper supports beneath the test bar (170mm in these tests), B is the width of the bar (25mm) and D is the depth of the bar (25mm). The flexure strength, S, is determined from the maximum force, $F_{max}$:

$$S = \frac{3 \times F_{max} \times L}{2 \times B \times D^2}$$

A minimum of 5 bars is tested for each sample set and the mean value for each sample set is reported.

## Brief Description of the Invention

We have now surprisingly found that soft frozen confections having a low solids content can be obtained when most of the ice is present as large approximately spherical particles. Accordingly, in a first aspect the present invention provides a process for making a frozen confection having a total solids content of from 5 to 15% by weight of the frozen confection and an overrun of less than 20%, the process comprising:

> a) preparing a dispersion comprising: 25% to 75% by weight of frozen particles having a mean size of from 1 to 10mm and a mean aspect ratio of 1.5 or less; and 75% to 25% by weight of a mix;
> b) subsequently cooling the dispersion to below -10°C.

Preferably at least 80% by weight, more preferably at least 90%, of the frozen particles have a size of from 1 to 10mm.
Preferably the frozen particles have a mean size of from 2 to 5mm.
Preferably the total solids content of the frozen particles is less than 5 wt%; more preferably the frozen particles are ice.
Preferably the total solids content of the mix is from 15 to 40 wt%.
Preferably in step b) the dispersion is cooled to below -18°C.

In one embodiment, in step a) the dispersion is formed by preparing the frozen particles and the mix together, such as in a batch freezer.

In another embodiment, in step a) the frozen particles and the mix are prepared separately and then combined to form the dispersion.

In a second aspect the present invention provides a frozen confection having a total solids content of from 5 to 15% by weight of the frozen confection, an overrun of less than 20%, and a Young's modulus of less than 150 MPa at -18°C; the frozen confection comprising frozen particles having a mean size of from 1 to 10mm and a mean aspect ratio of 1.5 or less, in an amount of from 25 to 75% by weight of the frozen confection.

Preferably the frozen particles have a mean size of from 2 to 5mm.
Preferably the total solids content of the frozen particles is less than 5 wt%; more preferably the frozen particles are ice.
Preferably the solids content of the frozen confection is from 8 to 12 wt%.
Preferably the overrun is less than 10%.
Preferably the ice content of frozen confection is greater than 80 wt%.
Preferably the Young's modulus is less than 120MPa at -18°C.
Preferably the frozen confection has a strength of less than 0.5 MPa at -18°C.

In a related aspect the present invention provides frozen confections obtainable by the process of the invention and obtained by the process of invention.

**Detailed Description of the Invention**

Frozen confection

The frozen confection has a total solids content of less than 15% by weight of the frozen confection, preferably less than 14%, more preferably less than 12%, most preferably less than 10%. The lower the total solids content (and hence sugar content), the more attractive is the product to health conscious consumers. Frozen confections having these low total solids contents have ice contents at -18°C of at least about 80% and may be as high as 85% or greater. The frozen confection has a total solids content of at least 5%, preferably at least 7%, more preferably at least 8% by weight of the frozen confection, in order to provide a product that has an acceptable sweetness and taste. The frozen confection has an overrun of less than 20%, preferably less than 10%, more preferably less than 5%.

Despite their low solids content and low overrun, frozen confections according to the invention are surprisingly soft. The frozen confections of the invention have lower Young's modulus and strength than identically formulated confections produced by conventional process routes. The frozen confections of the invention have (at -18°C) a Young's modulus of less than 150MPa, preferably less than 120 MPa, more preferably less than 100 MPa; and a strength of typically less than 0.5 MPa, preferably less than 0.35 MPa, more preferably less than 0.25 MPa.

Mix

The mix is an unfrozen solution and/or suspension. Preferably the mix has a total solids content of at least 15% by weight of the mix, more preferably at least 20%. Preferably also the mix has a solids content of less than 40%, more preferably less then 30% by weight of the mix. When the mix has a solids content in this range, the corresponding amount of frozen particles required to produce a final frozen confection with a solids content of less than 15% is within a convenient range i.e. about 25% to 75% by weight of the frozen confection.

Mixes typically contain, in addition to water and sugars, ingredients conventionally found in water ices, fruit ices and milk ices, such as fruit (for example in the form of fruit juice or fruit puree) milk solids, colours, flavours, stabilizers and acidifying agents. The term "sugars" is meant to include monosaccharides (e.g. dextrose, fructose), disaccharides (e.g. sucrose, lactose, maltose), oligosaccharides containing from 3 to ten monosaccharide units joined in glycosidic linkage (e.g. maltotriose), corn syrups with a dextrose equivalent (DE) of at least 10, and sugar alcohols (e.g. erythritol arabitol, xylitol, sorbitol, glycerol, mannitol, lactitol and maltitol). Of the ingredients present in frozen confections, sugars provide most of the freezing point depression, and hence determine the ice content of the confection. In simple frozen confection formulations, such as basic water ices, the solids content is essentially made up of the sugars, with only small amounts of other ingredients (e.g. colours, flavours, stabilisers). The non-sugar ingredients have only a very small freezing point depression effect, since firstly they are only present in small amounts, and secondly, they are usually higher molecular weight molecules than sugars. In more complex formulations, such as milk ices and fruit ices, non-sugar ingredients make up a larger proportion of the total solids. Thus for example milk ices contain a significant amount of milk protein, and fruit ices may contain fibre from fruit puree. Such mixes can be prepared by conventional methods known in the art.

Frozen Particles

The frozen particles have a low total solids content, preferably less than 5% by weight of the frozen particles, more preferably less than 1%. In a preferred embodiment, the frozen particles are ice. In another embodiment, a small amount of solids may be present, so that, for example, the frozen particles are flavoured or coloured. In this case the total solids content is less than 0.5 wt%, preferably less than 0.1 wt%. The lower the solids content of the frozen particles, the lower the solids content of the final product for a given total solids content of the mix. Thus when it desired to produce frozen products having a particularly low total solids content (such as less than 10%), the frozen particles should be chosen to have a solids content at the low end of the specified range (for example less than 1%), so that the amount of frozen particles required is not too high in proportion to the amount of mix.

The frozen particles in the frozen confection have a mean size of at least 1 mm, preferably at least 1.5mm, most preferably at least 2mm. Preferably their mean size is less than 10mm, more preferably less than 7mm, most preferably less than 5mm. Frozen particles of this size result in a soft product and are convenient for processing. It is preferable that the frozen particles are relatively uniform in size. The frozen particles are approximately spherical, by which it is meant that they have a mean aspect ratio of 1.5 or less, preferably 1.3 or less.

Dispersion of Frozen Particles and Mix

In one embodiment, the dispersion is prepared by producing the frozen particles and the mix together, for example in a batch freezer. Ice crystals are generated in the freezer, usually at a refrigerated surface. The ice crystals are initially small (0.1 mm or less). By holding the partially frozen solution in the freezer at a relatively warm temperature (e.g. -2 or -3°C), recrystallization occurs. Recrystallization is a process in which a large number of small ice crystals transform into a smaller number of large crystals in order to lower the total surface area (and hence total energy), without changing the overall amount of ice.

Thus over a period of time the mean size of the ice crystals increases. Recrystallization can be speeded up by temperature fluctuations. A suitable type of batch freezer for preparing the frozen particles and mix together by this method is a slush machine or slush maker. Slush makers essentially consist of a tank or reservoir containing a cooling element. Ice forms on the surface of the cooling element and is then removed by a rotating screw that also gently agitates the mix. A number of different slush makers are commercially available, for example the MultiFreeze 228/Vip (Electro Freeze Ltd, Eastleigh, Hampshire UK) and the Granizadora Penguin (Promek S.r.l., Turate, Italy). Alternatively, the frozen particles and mix can be prepared together by recrystallization in an ageing tank as described in JP 06/189,686. In this embodiment, the resulting frozen particles consist essentially of ice, are rounded (approximately spherical) in shape and are clear in appearance. The optically clear nature of the particles in the frozen confection results in an attractive visual impact for consumers, and their rounded shape results in a pleasant in-mouth sensation.

In another embodiment, the frozen particles and the mix are prepared separately and then combined to form the dispersion. This method has the advantage that the frozen particles need not necessarily be ice. For example the frozen particles can be produced from water or aqueous solutions / suspensions by freezing drops on a drum freezer; by direct immersion of droplets in liquid nitrogen, for example as described in EP-A-1348341; by forming frozen particles in moulds; or by using a fragmented ice maker such as the Ziegra Ice machine ZBE 4000-4, ZIEGRA-Eismaschinen GmbH, Isernhagen, Germany - a fragmented ice maker is described in US 4 569 209.

The dispersion can be produced either by adding frozen particles of the required size, or alternatively by initially adding larger particles to the mix and subsequently mechanically reducing the size of these particles to the required size. Such a subsequent size reduction step provides a convenient method of ensuring that the frozen particles in the frozen confection have a mean size within the preferred ranges. The size reduction step can be performed by passing the particles through a constriction of the required size (i.e. 1 to 10 mm) for example, a pump comprising an outlet of this size and/or parallel plates separated by this distance, wherein one of the plates rotates relative to the other. A suitable device (a crushing pump) which allows for in-line particle size reduction is described in WO 2006 / 007922.

In order that most of the ice in the frozen confection is present in the form of large frozen particles, the dispersion preferably contains as few small particles as possible; in particular there are few small particles (e.g. less than 0.5 mm) since the presence of such small particles in the dispersion at the start of step b) of the process of the invention results in hard frozen confections. Preferably substantially all of the frozen particles in the dispersion have a size of from 1 to 10mm. The phrase "substantially all" means at least 80%, more preferably at least 90%, most preferably at least 95% by weight of the ice is in the form of large frozen particles, so that little, if any, ice is present as small ice crystals. For the same reason, it is preferable that the mix is not partially frozen to form an ice slurry (in contrast with the process described in US 5 698 247 where ice granules are mixed with an ice slurry).

When the frozen particles are produced by recrystallization, the small particles are inherently reduced / removed. However, if the process for producing the frozen particles results in a significant number of small particles (as may happen if a size reduction step is used or if the mix is partially frozen to form an ice slurry), a further process step should be included in order to remove them or reduce their number, for example by sieving, or by recrystallization (see e.g. example 7 below).

When the frozen particles and the mix are prepared separately, they are subsequently combined. They can be combined by mixing them together in any suitable manner, for example by feeding the frozen particles through a fruit feeder into the mix. The frozen particles are preferably at a temperature of about -0.5°C or below when combined with the mix, which is preferably at a temperature of about 3°C or below. The temperature difference between the frozen particles and the mix should not be too large, i.e. less than about 10°C, preferably less than 5°C so as to avoid melting of the frozen particles.

The frozen particles constitute at least 25%, more preferably at least 30%, most preferably at least 40% by weight of the frozen confection. The greater the amount of frozen particles as a percentage of the frozen confection, the lower the solids content of the frozen confection for a given solids content of the mix. For example, adding 50% ice particles means that the total solids content of the frozen confection is half that of the mix. The frozen particles constitute at most 75%, preferably at most 70%, more preferably at most 60% by weight of the frozen confection. We have found that it is difficult to obtain a product in which the frozen particles are evenly dispersed in the mix when the frozen particles are present in larger amounts.

The total solids content of the frozen confection ($TS_{confection}$) is given by:

$$TS_{confection} = \left(f \times TS_{particles} + (100 - f) \times TS_{mix}\right)/100$$

where $TS_{mix}$ is the total solids content of the mix, $TS_{particles}$ is the total solids content of the particles (which is zero if the particles are pure ice), and f is the amount of frozen particles expressed as a weight percentage of the frozen confection. Some examples of suitable values are given below.

| $TS_{mix}$ | $TS_{particles}$ | f | $TS_{confection}$ |
|---|---|---|---|
| 13 | 0 | 38 | 8 |
| 16 | 0 | 50 | 8 |
| 16 | 3 | 62 | 8 |
| 15 | 0 | 33 | 10 |
| 15 | 5 | 50 | 10 |
| 25 | 0 | 60 | 10 |

Preferably, the dispersion is not subjected to deliberate steps such as whipping to increase the overrun. Nonetheless, it will be appreciated that during the preparation of unaerated frozen confections, low levels of air (less than 20% overrun) may be incorporated in the product.

Subsequent cooling step

After the dispersion of frozen particles and mix has been prepared, the temperature is lowered to below -10°C, for example -18°C to -25°C (typical storage temperatures). For this step, the dispersion of frozen particles and mix may be placed in moulds, and sticks may be inserted. The cooling step may be a conventional hardening step, such as blast freezing (e.g. -35°C), prior to storage.

Since the dispersion prepared in step a) of the process of the invention already contains a large amount of ice, only a relatively small amount of ice is formed in the subsequent cooling step b). As a result the size of the frozen particles does not change significantly during step b). We have found that the resulting frozen confections are very soft considering their high ice content.

The present invention will now be further described with reference to the following figures and the examples which are illustrative only and non-limiting, wherein:

Figure 1 shows a schematic set up for the four point bend test.
Figure 2 shows a schematic force-displacement four point bend test curve for a frozen confection.
Figure 3 shows images of frozen confections.

**Examples**

Examples 1A-5A are various frozen confections (water ices, milk ices and fruit ices) according to the invention. Comparative examples 1 B, 2B, 4B, 5B and 1C to 5C are frozen confections with the same formulation as examples 1A to 5A respectively, but prepared according to conventional processes. In each example, mixes were produced as follows.

All ingredients except for the flavour and acids (where used) were combined in an agitated heated mix tank and subjected to high shear mixing at a temperature of 65°C for 2 minutes. The resulting mix was passed through an homogeniser at 150 bar and 70°C, pasteurised at 83°C for 20 s and then rapidly cooled to 4°C using a plate heat exchanger. The flavour and acids (where used) were added to the mix which was then held at 4°C in a stirred tank for around 4 hours prior to freezing.

Examples 1A-5A were produced by batch freezing in a slush maker. Comparative examples 1 B, 2B, 4B and 5B were produced by a conventional process route, quiescent freezing in moulds. Comparative examples 1C to 5C were produced by another conventional process route, freezing in a continuous ice cream freezer (scraped-surface heat exchanger). The process details are as follows.

*A: Batch freezing in a slush maker*

Mix was placed in either a Granizadora Penguin slush maker (examples 1A and 2A) or an Electrofreeze MultiFreeze 228/Vip (examples 3A, 4A and 5A). Stirring/scraping and cooling was switched on, thereby chilling the mix and generating small ice crystals. The slush maker automatically controls the temperature by switching the refrigeration on / off in order to keep the torque on the stirring/scraping element within a set range. Samples were frozen in the slush maker for at least 24 hours, such that the ice particles were approximately 2-4mm in size. The final temperature of the mixes was approximately -2 to -3°C. Samples were then extruded into pre-cooled moulds and hardened at -25°C. The amount of large ice particles in the frozen confection depends on the temperature of the mix in the slush maker: the lower the temperature (for a given formulation), the greater the amount of ice formed in the slush maker, substantially all of which is in the form of large ice particles. In examples 1A-5A, the large ice particles constituted 55 to 60 wt% of the frozen confection. As a result, the mix was concentrated by a factor of 100 / (100-55), i.e. about 2.3.

*B: Quiescent freezing*

Unfrozen mix was poured into pre-cooled moulds and frozen at -25°C.

*C: Continuous freezing in an ice cream freezer*

Mix was passed though a MF75 Technohoy freezer at 0.5 litres per minute with a dasher speed of 400rpm. The extrusion temperature was chosen such that the partially frozen mix contained sufficient ice at extrusion from the freezer that it could be easily filled into moulds. Samples were extruded into pre-cooled moulds and hardened at -25°C.

Example 1: Water ice

A mix was prepared with the following formulation:

Table 1

| Ingredient | wt % |
|---|---|
| Sucrose | 6.3 |
| Dextrose | 1.8 |
| Locust bean gum | 0.2 |
| Colours | 0.25 |
| Flavours | 0.08 |
| Citric acid | 0.45 |
| Hyfoama DS* | 0.15 |
| Water | to 100 |
| Total solids | 9.1 |
| Ice content at -18°C | 91 |

Hyfoama DS is a hydrolysed enzymatically solubilised milk protein (casein) available from Quest, Bromborough, UK. The dextrose was supplied as a monohydrate. The ice content at -18°C was calculated using the method described on pages 14-16 of WO 98 / 41109.

The mix was split into three parts and frozen by process routes A, B and C respectively. For process route C, the solids content of the mix is so low that the freezer barrel iced up, i.e. ice initially formed very rapidly on the barrel walls, and the scraper was not able to scrape it all off. As a result, the freezer could only be operated for a very short period of time, just sufficient to collect a small amount of product for testing. The mechanical properties of the frozen confection bars were measured as described above. The results are shown in Table 2.

Table 2

| Example | Modulus (MPa) | Strength (MPa) |
|---|---|---|
| **1A** | 72 ($\pm$ 16) | 0.18 ($\pm$ 0.04) |
| **1B** | 160 ($\pm$ 26) | 0.46 ($\pm$ 0.06) |

(continued)

| Example | Modulus (MPa) | Strength (MPa) |
|---|---|---|
| 1C | 380 (± 46) | 0.96 (± 0.06) |

Example 1A according to the invention had a substantially lower modulus and strength than the comparative examples, less than half that of example 1 B (quiescently frozen) and less than one fifth of that of example 1C (continuous ice cream freezer), even though all three samples had exactly the same ice content.

The samples were also eaten. Example 1A had to be de-moulded and handled very carefully as there was a tendency for bars to fall apart due to the softness. The samples were easily biteable. Example 1 B was only just biteable. Example 1C could not be bitten, and when cut with a sharp knife it snapped audibly and broke sharply.

In order to confirm that the softness was not the result of incorporation of a large amount of air into the samples, the overrun of example 1A was measured using Archimedes' principle. A beaker of cold water was placed on a balance, and the change in the apparent weight when a sample was held under the water was recorded, as described on pages 177 - 179 of "The Science of Ice Cream", C. Clarke, RSC, Cambridge 2004. The overrun was found to be 8%.

Example 2: Tomato water ice

A mix was prepared with the following formulation:

Table 3

| Ingredient | wt % |
|---|---|
| Sucrose | 1.5 |
| Dextrose | 4.5 |
| 28 DE corn syrup | 3.0 |
| Guar gum | 0.2 |
| Flavours | 0.3 |
| Hyfoama DS* | 0.2 |
| Tomato puree | 15 |
| Salt | 0.1 |
| Water | to 100 |
| Total solids | 13.7 |
| Ice content at -18°C | 79 |

28 DE corn (glucose) syrup was C*Dry™ GL 01924, supplied by Cerestar (France) and had a moisture content of 22 wt%. On a dry basis it consists of 3% glucose, 11% maltose, 16.5% maltotriose and 69.5% higher saccharides. The tomato puree contained 30% solids.

The mechanical properties of the frozen confection bars were measured as described above. The results are shown in Table 4.

Table 4

| Example | Modulus (MPa) | Strength (MPa) |
|---|---|---|
| 2A | 112 (± 14) | 0.41 (± 0.03) |
| 2B | 155 (± 13) | 0.56 (± 0.04) |
| 2C | 378 (± 40) | 1.01 (± 0.12) |

Again, the example according to the invention (2A) had a significantly lower modulus and strength than the comparative examples (2B, 2C). The overrun of example 2A was measured to be 2%.

Example 3: Milk ice

A milk ice type mix was prepared with the following formulation:

Table 5

| Ingredient (wt %) | 3 |
|---|---|
| Fructose | 5.0 |
| Locust bean gum | 0.2 |
| Skim milk powder | 5.0 |
| Whey powder | 2.0 |
| Coconut oil | 2.0 |
| Water | to 100 |
| Total solids | 13.9 |
| Ice content at -18°C | 80 |

Skim milk powder has a moisture (water) content of about 4%. The whey powder was Avonol 600 and also has a moisture content of about 4%.

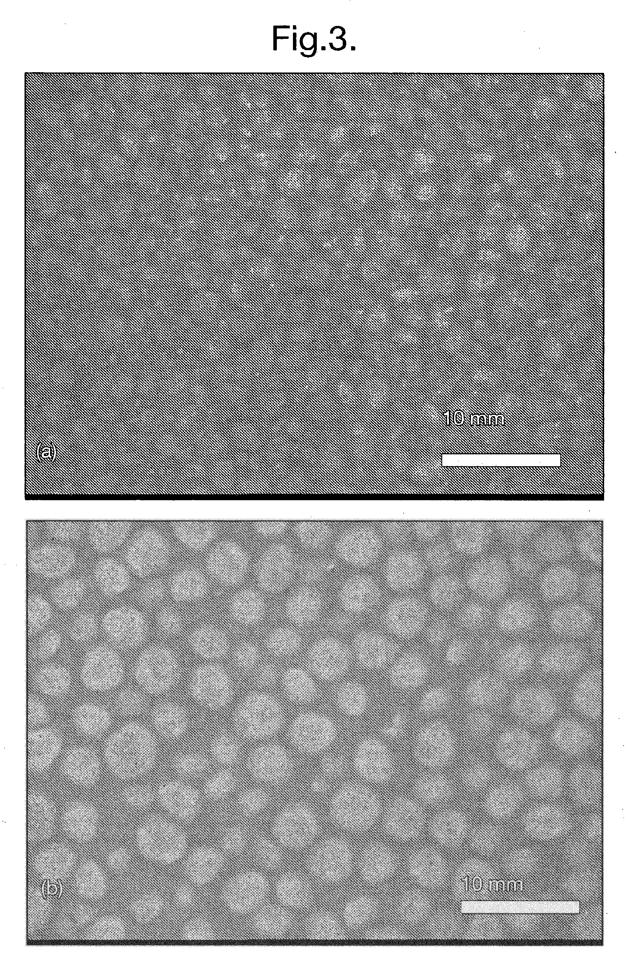

Samples were prepared by process routes A and C. For process route A, samples were removed from the slush maker after 1 day (at a temperature of -2.2°C) and 3 days (at -2.8°C). Figure 3 shows photographs of the samples taken from the slush maker after (a) 1 day and (b) 3 days. Each sample was placed onto a Petri dish to form a monolayer of ice particles, and then frozen at -28°C. The Petri dish was placed on a light box, and a digital photograph was taken. The image shows approximately spherical ice particles approximately (a) 2mm in diameter after 1 day and (b) 4mm in diameter after 3 days in the slush maker. The mechanical properties of the frozen confection bars were measured as described above. The results are shown in Table 6. The overrun of the samples was also measured and found to be less than 1% in each case.

Table 6

| Example | Modulus (MPa) | Strength (MPa) |
|---|---|---|
| 3A (1 day) | 114 ($\pm$ 12) | 0.34 ($\pm$ 0.01) |
| 3A (3 days) | 49 ($\pm$ 6) | 0.23 ($\pm$ 0.01) |
| 3C | 161 ($\pm$ 19) | 0.37 ($\pm$ 0.04) |

Example 3A after 1 day in the slush maker had a significantly lower modulus and strength than comparative example 3C. The modulus and strength of the 3 day sample are even smaller.

Examples 4, 5: Fruit ice

Mixes consisting of pure apple juice (example 4) and orange juice (example 5) were used. The total solids contents of the fruit juices and the ice content at -18°C are shown in Table 7.

Table 7

| | 4 | 5 |
|---|---|---|
| Total solids | 10.9 | 13.8 |
| Ice content at -18°C | 81.2 | 80.1 |

Samples were prepared by process routes A, B and C. The mechanical properties of the frozen confection bars were measured as described above. The results are shown in Table 8.

Table 8

| Example | Modulus (MPa) | Strength (MPa) |
|---------|---------------|----------------|
| 4A | 144 (± 40) | 0.12 (± 0.03) |
| 4B | 471 (± 41) | 0.68 (± 0.06) |
| 4C | 631 (± 69) | 1.00 (± 0.28) |
| 5A | 95 (± 17) | 0.10 (± 0.01) |
| 5B | 255 (± 36) | 0.38 (± 0.07) |
| 5C | 673 (± 66) | 1.17 (± 0.22) |

Again, the examples according to the invention (4A, 5A) had a significantly lower modulus and strength than the comparative examples (4B, 4C, 5B, 5C).

Example 6

Example 6 demonstrates an alternative process according to the invention wherein the frozen particles are formed separately from the mix, and then combined before the subsequently cooling step. A mix was prepared with the following formulation:

Table 9

| Ingredient | wt % |
|------------|------|
| Sucrose | 15.1 |
| Dextrose | 4.3 |
| Locust bean gum | 0.48 |
| Citric acid | 1.1 |
| Xanthan gum | 0.8 |
| Water | to 100 |
| Total solids mix | 21.4 |
| % added ice | 51.0 |
| Total solids frozen confection | 10.5 |
| Ice content of frozen confection at -18°C | 83.8 |

Water was dripped through nozzles (1 mm internal diameter) into liquid nitrogen where it rapidly froze into approximately spherical particles of from 1 to 4mm. The ice particles were removed from the liquid nitrogen bath and held at -6°C. 970g of the particles was dispersed in 931g of the mix (which had been chilled to 2°C) and stirred. This dispersion was poured into pre-cooled moulds and frozen at -25°C. The xanthan helped to ensure that the ice particles remained evenly dispersed in the mix during freezing. The mechanical properties of the frozen confection bars were measured as described above. Example 6 had a low Young's modulus and strength, shown in Table 10.

Table 10

| Example | Modulus (MPa) | Strength (MPa) |
|---------|---------------|----------------|
| 6 | 94 (± 13) | 0.17 (± 0.01) |

Example 7

Example 7 demonstrates another alternative process according to the invention wherein the frozen particles are formed separately from the mix, and then combined before the subsequent cooling step. A mix was prepared with the following formulation:

Table 11

| Ingredient | wt % |
|---|---|
| Sucrose | 8.51 |
| Dextrose | 2.43 |
| Locust bean gum | 0.27 |
| Citric acid | 0.61 |
| Orange flavour | 0.11 |
| Curcumin | 0.01 |
| Beta carotene 10% | 0.02 |
| Hygel | 0.20 |
| Water | to 100 |
| Total solids mix | 12.0 |
| % added ice | 35 |
| Total solids frozen confection | 7.8 |
| Ice content of frozen confection at -18°C | 86 |

The mix was passed through a Crepaco WO4 ice cream freezer (a scraped surface heat exchanger) where it was cooled to a temperature of -1.9°C without aeration, forming an ice slurry containing approximately 40 wt% small ice crystals. A Ziegra Ice machine ZBE 4000-4 (ZIEGRA-Eismaschinen GmbH, Isernhagen, Germany) was used to produce ice particles measuring approximately 5 x 5 x 5-7 mm. The ice particles were fed into the stream of partially frozen mix as it left the freezer, using a Hoyer FF4000 fruit feeder (vane type). The flow rate of the partially frozen mix from the freezer and the rate of ice addition were controlled to give the desired amount of large ice particles (35 wt% of the dispersion). This dispersion was then passed through a size-reduction device (a crushing pump), as described in WO 2006 / 007922, with a 4mm gap size. The size-reduction device ensures that the ice particles were reduced to a size of no larger than 4mm in diameter.

The resulting dispersion contained 35 wt% large (-4mm) ice particles and approximately 26 wt% (i.e. 40% of 65%) small ice crystals (- 0.2 mm). This dispersion was then placed into a MultiFreeze 228/Vip slush maker where it was kept chilled at -1.2 to -1.5°C and allowed to recrystallize. Samples were removed from the slush maker after 2 hours and 22 hours, extruded into pre-cooled moulds and hardened at -25°C. A comparative example was taken directly from the crushing pump and placed in moulds, so that the small ice crystals did not recrystallize. The mechanical properties and overruns of the frozen confection bars were measured as described above. The results are shown in Table 12.

Table 12

| Example | Modulus (MPa) | Strength (MPa) | Overrun (%) |
|---|---|---|---|
| 0 hours in slush maker | 328 ± 63 | 0.58 ± 0.07 | 2.7 |
| 2 hours in slush maker | 145 ± 14 | 0.18 ± 0.01 | 8.0 |
| 22 hours in slush maker | 86 ± 9 | 0.11 ± 0.01 | 6.7 |

The samples taken directly from the crushing pump (which contained a substantial amount of small ice crystals) had substantially larger Young's modulus and strength than the samples which had been allowed to recrystallize in the slush maker. A longer time in the slush maker resulted in a softer frozen confection, i.e. minimizing the amount of very small ice crystals at the start of the subsequent cooling step resulted in softer products.

In summary, the above examples show that frozen confections having a low solids content and low overrun were remarkably soft when most of the ice was present as large, approximately spherical particles.

**Claims**

1. A process for making a frozen confection having a total solids content of from 5 to 15% by weight of the frozen confection and an overrun of less than 20%, the process comprising:

   a) preparing a dispersion comprising: 25% to 75% by weight of frozen particles having a mean size of from 1 to 10mm and a mean aspect ratio of 1.5 or less; and 75% to 25% by weight of a mix;
   b) subsequently cooling the dispersion to below -10°C.

2. A process according to claim 1 wherein at least 80% by weight of the frozen particles have a size of from 1 to 10mm.

3. A process according to claim 1 or claim 2 wherein the frozen particles have a mean size of from 2 to 5mm.

4. A process according to any of claims 1 to 3 wherein the total solids content of the frozen particles is less than 5 wt%.

5. A process according to claim 4 wherein the frozen particles are ice.

6. A process according to any of claims 1 to 5 wherein the total solids content of the mix is from 15 to 40 wt%.

7. A process according to any of claims 1 to 6 wherein in step b) the dispersion is cooled to below -18°C.

8. A process according to any of claims 1 to 7 wherein the dispersion is formed by preparing the frozen particles and the mix together.

9. A process according to any of claims 1 to 7 wherein the frozen particles and the mix are prepared separately and then combined to form the dispersion.

10. A frozen confection having a total solids content of from 5 to 15% by weight of the frozen confection, an overrun of less than 20%, and a Young's modulus of less than 150 MPa at -18°C; the frozen confection comprising frozen particles having a mean size of from 1 to 10mm and a mean aspect ratio of 1.5 or less, in an amount of from 25 to 75% by weight of the frozen confection.

11. A frozen confection according to claim 10 wherein the frozen particles have a mean size of from 2 to 5mm.

12. A frozen confection according to claim 10 or claim 11 wherein the total solids content of the frozen particles is less than 5 wt%.

13. A frozen confection according to claim 12 wherein the frozen particles are ice.

14. A frozen confection according to any of claims 10 to 13 wherein the solids content of the frozen confection is from 8 to 12 wt%.

15. A frozen confection according to any of claims 10 to 14 wherein the overrun is less than 10%.

16. A frozen confection according to any of claims 10 to 15 wherein the ice content of frozen confection is greater than 80 wt%.

17. A frozen confection according to any of claims 10 to 16 wherein the frozen confection has a strength of less than 0.5 MPa at -18°C.


**Patentansprüche**

1. Verfahren zum Herstellen von gefrorenem Konfekt mit einem Gesamtgehalt an Feststoffen von 5 bis 15 Gew.-% des gefrorenen Konfekts und einem Overrun von weniger als 20 %,
wobei das Verfahren Folgendes aufweist:

   a) Herstellen einer Dispersion, die Folgendes aufweist: 25 bis 75 Gew.-% gefrorene Teilchen mit einer mittleren Größe von 1 bis 10 mm und einem mittleren Seitenverhältnis von 1,5 oder weniger, und 75 bis 25 Gew.-% eines Gemischs;

b) anschließendes Abkühlen der Dispersion auf weniger als -10 °C.

**2.** Verfahren nach Anspruch 1,
wobei mindestens 80 Gew.-% der gefrorenen Teilchen eine Größe von 1 bis 10 mm aufweisen.

**3.** Verfahren nach Anspruch 1 oder 2,
wobei die gefrorenen Teilchen eine mittlere Größe von 2 bis 5 mm aufweisen.

**4.** Verfahren nach einem der Ansprüche 1 bis 3,
wobei der Gesamtgehalt an Feststoffen der gefrorenen Teilchen weniger als 5 Gew.-% beträgt.

**5.** Verfahren nach Anspruch 4,
wobei die gefrorenen Teilchen Eis sind.

**6.** Verfahren nach einem der Ansprüche 1 bis 5,
wobei der Gesamtgehalt an Feststoffen des Gemischs 15 bis 40 Gew.-% beträgt.

**7.** Verfahren nach einem der Ansprüche 1 bis 6,
wobei die Dispersion im Schritt b) auf weniger als -18 °C abgekühlt wird.

**8.** Verfahren nach einem der Ansprüche 1 bis 7,
wobei die Dispersion gebildet wird, indem die gefrorenen Teilchen und das Gemisch zusammen hergestellt werden.

**9.** Verfahren nach einem der Ansprüche 1 bis 7,
wobei die gefrorenen Teilchen und das Gemisch getrennt hergestellt werden und dann gemischt werden, um die Dispersion zu erzeugen.

**10.** Gefrorenes Konfekt mit einem Gesamtgehalt an Feststoffen von 5 bis 15 Gew.-% des gefrorenen Konfekts, einem Overrun von weniger als 20 % und einem Youngschen Modul bei -18 °C von weniger als 150 MPa, wobei das gefrorene Konfekt gefrorene Teilchen mit einer mittleren Größe von 1 bis 10 mm und einem mittleren Seitenverhältnis von 1,5 oder weniger in einer Menge von 25 bis 75 Gew.-% des gefrorenen Konfekts aufweist.

**11.** Gefrorenes Konfekt nach Anspruch 10,
wobei die gefrorenen Teilchen eine mittlere Größe von 2 bis 5 mm aufweisen.

**12.** Gefrorenes Konfekt nach Anspruch 10 oder 11,
wobei der Gesamtgehalt an Feststoffen der gefrorenen Teilchen weniger als 5 Gew.-% beträgt.

**13.** Gefrorenes Konfekt nach Anspruch 12,
wobei die gefrorenen Teilchen Eis sind.

**14.** Gefrorenes Konfekt nach einem der Ansprüche 10 bis 13,
wobei der Feststoffgehalt des gefrorenen Konfekts 8 bis 12 Gew.-% beträgt.

**15.** Gefrorenes Konfekt nach einem der Ansprüche 10 bis 14,
wobei der Overrun weniger als 10 % beträgt.

**16.** Gefrorenes Konfekt nach einem der Ansprüche 10 bis 15,
wobei der Eisgehalt des gefrorenen Konfekts mehr als 80 Gew.-% beträgt.

**17.** Gefrorenes Konfekt nach einem der Ansprüche 10 bis 16,
wobei das gefrorene Konfekt eine Festigkeit bei -18 °C von weniger als 0,5 MPa aufweist.

**Revendications**

1. Procédé de fabrication d'une confiserie glacée présentant une teneur totale en matières solides de 5 à 15 % en masse de la confiserie glacée et une surcharge inférieure à 20 %, le procédé comprenant :

   a) la préparation d'une dispersion comprenant : de 25 % à 75 % en poids de particules glacées présentant une taille moyenne de 1 à 10 mm et un taux d'allongement moyen de 1,5 ou inférieur ; et de 75 % à 25 % en poids d'un mélange ;
   b) le refroidissement subséquent de la dispersion en dessous de -10°C.

2. Procédé selon la revendication 1, dans lequel au moins 80 % en poids des particules glacées présentent une taille de 1 à 10 mm.

3. Procédé selon la revendication 1 ou la revendication 2, dans lequel les particules glacées présentent une taille moyenne de 2 à 5 mm.

4. Procédé selon l'une quelconque des revendications 1 à 3, dans lequel la teneur totale en matières solides des particules glacées est inférieure à 5 % en poids.

5. Procédé selon la revendication 4, dans lequel les particules glacées sont de la glace.

6. Procédé selon l'une quelconque des revendications 1 à 5, dans lequel la teneur totale en matières solides du mélange est de 15 à 40 % en poids.

7. Procédé selon l'une quelconque des revendications 1 à 6, dans lequel dans l'étape b) la dispersion est refroidie en dessous de -18°C.

8. Procédé selon l'une quelconque des revendications 1 à 7, dans lequel la dispersion est formée en préparant les particules glacées et le mélange ensemble.

9. Procédé selon l'une quelconque des revendications 1 à 7, dans lequel les particules glacées et le mélange sont préparés séparément et sont ensuite combinés pour former la dispersion.

10. Confiserie glacée présentant une teneur totale en matières solides de 5 à 15 % en poids de la confiserie glacée, une surcharge inférieure à 20 %, et un module de Young inférieur à 150 MPa à -18°C ; la confiserie glacée comprenant des particules glacées présentant une taille moyenne de 1 à 10 mm et un rapport d'allongement moyen de 1,5 ou inférieur, dans une quantité de 25 à 75 % en poids de la confiserie glacée.

11. Confiserie glacée selon la revendication 10, dans laquelle les particules glacées présentent une taille moyenne de 2 à 5 mm.

12. Confiserie glacée selon la revendication 10 ou la revendication 11, dans laquelle la teneur totale en matières solides des particules glacées est inférieure à 5 % en poids.

13. Confiserie glacée selon la revendication 12, dans laquelle les particules glacées sont de la glace.

14. Confiserie glacée selon l'une quelconque des revendications 10 à 13, dans laquelle la teneur en matières solides de la confiserie glacée est de 8 à 12 % en poids.

15. Confiserie glacée selon l'une quelconque des revendications 10 à 14, dans laquelle la surcharge est inférieure à 10 %.

16. Confiserie glacée selon l'une quelconque des revendications 10 à 15, dans laquelle la teneur en glace de la confiserie glacée est supérieure à 80 % en poids.

17. Confiserie glacée selon l'une quelconque des revendications 10 à 16, dans laquelle la confiserie glacée présente une résistance inférieure à 0,5 MPa à -18°C.

# Fig.1.

L = length between upper supports

D = depth
of sample

B = breadth
of sample

# Fig.2.

Force displacement curve for bend test

Gradient

Maximum Force

Load (kN)

0.02
0.015
0.01
0.005
0

0          0.5          1          1.5

Displacement (mm)

# Fig.3.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5738889 A
- US 5698247 A
- JP 6189686 A
- EP 1348341 A
- US 4569209 A
- WO 2006007922 A
- WO 9841109 A

**Non-patent literature cited in the description**

- *Diet, nutrition and the prevention of chronic diseases,* 2003
- **ROBERT T. MARSHALL ; H. DOUGLAS GOFF ; RICHARD W. HARTEL.** Ice Cream. Kluwer Academic/Plenum Publishers, 2003
- **MARSHALL et al.** Ice Cream. 2003, 296
- **CINDIO ; CORRERA.** *Journal of Food Engineering,* 1995, vol. 24, 405-415
- Concentration properties of aqueous solutions: conversion tables. Handbook of Chemistry and Physics. CRC Press
- Biomechanics Materials. A Practical Approach. Pub. IRL Press, 1992
- Handbook of Plastics Test materials. Pub. George Godwin Limited, 1981
- **C. CLARKE.** The Science of Ice Cream. RSC, 2004, 177-179